# EUROPÄISCHE PATENTSCHRIFT

(11) **EP 3 266 586 B1**
(45) Veröffentlichungstag und Bekanntmachung des Hinweises auf die Patenterteilung: **22.09.2021**
(21) Anmeldenummer: 17179583.4
(22) Anmeldetag: 04.07.2017
(51) Int. Cl.: B29C 48/335, B29C 48/21, B29C 48/09, B29C 48/49, B29C 48/71, B29C 48/10, B29C 48/30

(54) **MEHRSCHICHTWERKZEUG**
MULTIPLE LAYER TOOL
OUTIL MULTICOUCHES

(30) Priorität: 06.07.2016 DE 102016112428
(43) Veröffentlichungstag der Anmeldung: 10.01.2018
(73) Patentinhaber: Reifenhäuser GmbH & Co. KG Maschinenfabrik, 53844 Troisdorf (DE)
(72) Erfinder: Lübke, Frank, 54552 Steiningen (DE)
(74) Vertreter: Wagner Albiger & Partner Patentanwälte mbB

(56) Entgegenhaltungen:
- WO-A2-02/056930
- CN-B- 102 363 361
- DE-U1- 20 115 180
- DE-U1-202016 101 844
- DE-U1-212012 000 277
- US-A1- 2003 020 203

## Beschreibung

Die Erfindung betrifft ein Mehrschichtwerkzeug zur Herstellung eines aus mehreren Schichten bestehenden rohrförmigen Schmelzestranges thermoplastischer Kunststoffe. Derartige Mehrschichtwerkzeuge finden beispielsweise bei der Schlauch- bzw. Schlauchfolien-Extrusion Anwendung und umfassen ein Innenwerkzeug sowie ein das Innenwerkzeug umgebendes Außenwerkzeug, zwischen denen ein Schmelzekanal ausgebildet ist, der in eine Austrittsdüse mündet. Die Druckschriften DE 212012000277 U1, DE 20115180 U1, DE 202016101844 U1, WO 02/056930 A2 und CN 102363361 B beschreiben weitere Mehrschichtwerkzeuge.

Zur Herstellung eines mehrschichtigen rohrförmigen Schmelzestranges werden im Bereich des Innenwerkzeuges und gegebenenfalls auch des Außenwerkzeuges die einzelnen Schichten von angeschlossenen Extrudern als Schmelzestrang eingespeist und mittels eines Kanalsystems entlang des Umfanges des Schmelzekanals verteilt und von dort in den Schmelzekanal abgegeben, wobei sich die einzelnen Schichten unter Ausbildung des rohrförmigen Schmelzestranges sukzessive aufeinander legen und gemeinsam über die Austrittsdüse zur weiteren Verarbeitung austreten.

Im Bereich des Außenwerkzeuges erfolgt die Schmelzeverteilung entweder über sogenannte konzentrische Wendelverteiler, die unter anderem in der US 3,649,143 A beschrieben sind oder über ein sogenanntes "Pancake"-System mehrerer aufeinanderliegender flacher Module, wie es beispielsweise in der US 5,716,650 A beschrieben ist.

Auch im Bereich des Innenwerkzeuges bedient man sich bislang häufig konzentrischer Wendelverteiler, wobei die Zuführung der aus den Extrudern stammenden Schmelzen und der Platzbedarf der bekannten Anlagen nach wie vor verbesserungswürdig erscheint.

Aufgabe der Erfindung ist es, ein Innenwerkzeug vorzuschlagen, welches einen modularen Aufbau aufweist, einen flexiblen Anschlussbereich zum Anschluss unterschiedlicher Anzahlen von Extrudern bereitstellt und eine besonders effektive Verteilung der eingespeisten Schmelzen gewährleistet.

Zur Lösung dieser Aufgabe wird eine aus den beigefügten Zeichnungen ersichtliche Konstruktion vorgeschlagen. Es zeigen:
- Figur 1: einen Schnitt durch ein erfindungsgemäßes Mehrschichtwerkzeug;
- Figur 2: die Aufsicht auf die Oberseite einer Vorverteilplatte des erfindungsgemäßen Mehrschichtwerkzeugs;
- Figur 3: die Aufsicht auf die Unterseite der Vorverteilplatte gemäß Figur 2;
- Figur 4a: die Aufsicht auf eine erste Ausführungsform einer Modulplatte des Innenwerkzeuges des erfindungsgemäßen Mehrschichtwerkzeugs;
- Figur 4b: die Aufsicht auf eine zweite Ausführungsform einer Modulplatte des Innenwerkzeuges des erfindungsgemäßen Mehrschichtwerkzeugs;
- Figur 4c: die Aufsicht auf eine dritte Ausführungsform einer Modulplatte des Innenwerkzeuges des erfindungsgemäßen Mehrschichtwerkzeugs.

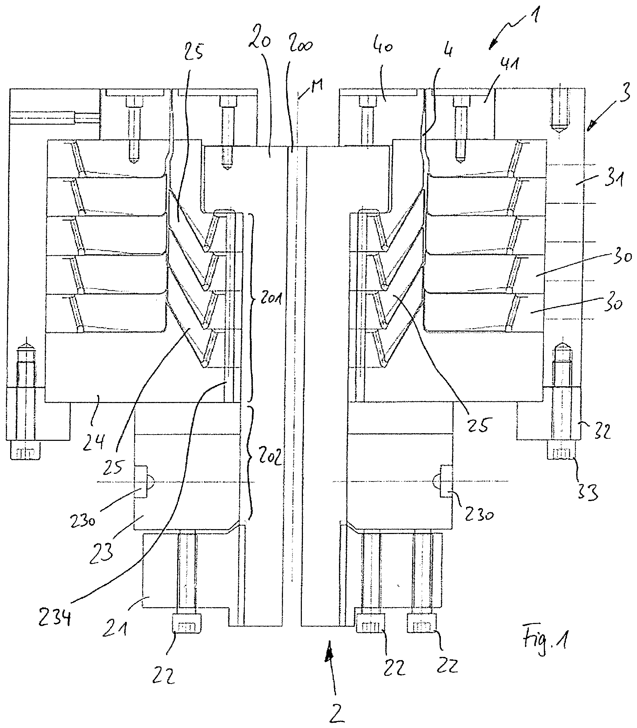

Aus der Figur 1 ist in einer schematischen Darstellung ein Mehrschichtwerkzeug 1 zur Herstellung eines mehrschichtigen rohrförmigen Schmelzestranges ersichtlich. Das Mehrschichtwerkzeug 1 umfasst ein mit Bezugszeichen 2 gekennzeichnetes Innenwerkzeug sowie ein das Innenwerkzeug 2 außenseitig umgebendes Außenwerkzeug 3, zwischen denen ein Schmelzekanal 4 ausgebildet ist, der in einer Austrittsdüse mündet, die zwischen konzentrisch zueinander angeordnetem Düseninnenteil 40 und Düsenaußenteil 41 definiert wird.

Das Innenwerkzeug 2 ist wie auch das Außenwerkzeug 3 im Wesentlichen symmetrisch zur Mittelachse M angeordnet. Das Innenwerkzeug 2 besteht aus einem Innendorn 20, der eine entlang der Mittelachse M verlaufende zentrale Durchgangsbohrung 200 aufweist und in Richtung auf das am Innendorn 20 befestigte Düseninnenteil 40 einen stufenförmig erweiterten Durchmesser aufweist.

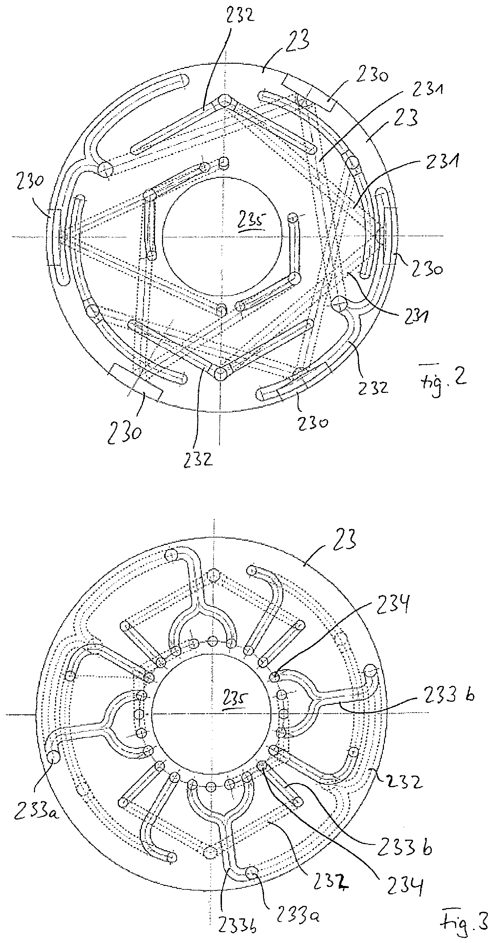

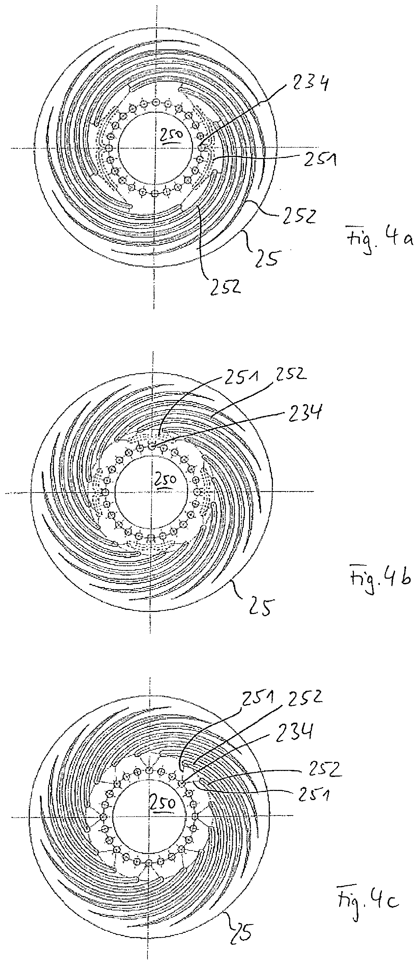

Ausgehend von diesem stufenförmig erweiterten Durchmesser schließt sich ein als Verteilabschnitt 201 bezeichneter erster Längenabschnitt des Innendorns 20 und hieran anschließend ein als Vorverteilabschnitt 202 bezeichneter zweiter Längenabschnitt an. Im Bereich des Vorverteilabschnittes 202 ist eine Vorverteilplatte 23 angeordnet, die nachfolgend anhand der Figuren 2 und 3 noch weiter erläutert wird. Im Bereich des Verteilabschnittes 201 schließen sich eine Grundplatte 24 sowie darauf aufliegend mehrere Modulplatten 25 an, die in der Aufsicht auf die jeweilige Unterseite in verschiedenen Ausführungsformen in den Figuren 4a bis 4c dargestellt sind und nachfolgend ebenfalls noch näher erläutert werden.

Sämtliche Modulplatten 25, die Grundplatte 24 sowie die Vorverteilplatte 23 sind mittels eines Spannjoches 21 und durch dieses in Gewindebohrungen hindurchgeführten Spannschrauben 22 gegenüber der stufenförmigen Erweiterung des Innendorns 20 auf diesem zu einer kompakten Einheit verspannt. Der Vorverteilabschnitt 202 sowie der Verteilabschnitt 201 weisen dabei jeder Vorverteilplatte 23 bzw. Modulplatte 25 und Grundplatte 24 zugeordnet einen abgestuften Zentriersitz für die jeweiligen zentralen Öffnungen 235, 250 derselben auf.

Die Zuführung der letztlich über die Austrittsdüse aus dem Schmelzekanal 4 austretenden Schichten des rohrförmigen Schmelzestranges von hier nicht dargestellten Extrudern wird wie folgt bewerkstelligt.

Die Vorverteilplatte 23 weist an mehreren geeigneten Positionen entlang des Umfanges Einspeiseöffnungen 230 auf, an die jeweils ein nicht dargestellter Extruder zu Zuführung eines Schmelzestranges angeschlossen wird. Innerhalb der Vorverteilplatte 23 verläuft die solchermaßen zugeführte Schmelze bzw. der Schmelzestrang entlang von an die Einspeiseöffnung 230 anschließenden ersten Verbindungskanälen 231, die beispielsweise wie aus der Figur 2 ersichtlich ausgehend von jeder Einspeiseöffnung 230 gabelförmig verzweigt verlaufen. Die jeweiligen Enden der ersten Verbindungskanäle 231 münden in Verteilkanäle 232 ein, die im Bereich der aus der Figur 2 in der Aufsicht ersichtlichen oberseitigen Stirnfläche der Vorverteilplatte 23 als nutförmige Vertiefungen auf unterschiedlichen Teilkreisen angeordnet sind. Die Verteilkanäle 232 können ihrerseits verzweigt ausgebildet sein.

Ausgehend von den jeweiligen Enden der Verteilkanäle 232 führen zweite Verbindungskanäle 233a durch die Vorverteilplatte 23 im Wesentlichen parallel zur Mittelachse M hindurch zur gegenüberliegenden unterseitigen Stirnfläche der Vorverteilplatte 23, die aus der Figur 3 ersichtlich ist. Von dort wird die zugeführte Schmelze auf dritte Verbindungskanäle 233 b übergeleitet, die in die Vorverteilplatte 23 wiederum parallel zur Mittelachse M durchsetzende Steigleitungen 234 einmünden. Die Steigleitungen 234 sind benachbart zur Öffnung 235 für den Innendorn 20 um diese Öffnung 235 herum angeordnet. Man erkennt, dass wahlweise die Verbindungskanäle 233 b jeweils zu lediglich einer Steigleitung 234 führen oder ihrerseits verzweigt ausgebildet sind und insoweit mit mehreren Steigleitungen 234 kommunizieren. Dies richtet sich nach der Rheologie und dem Massendurchsatz der zugeführten Schmelze.

Die Zuordnung der einzelnen der Schmelzezuführung dienenden Abschnitte zur unter- bzw. oberseitigen Stirnfläche ist lediglich beispielhaft und kann auch abweichend sowie umgekehrt erfolgen.

Die Anzahl der Steigleitungen 234 unterliegt keiner generellen Beschränkung, wobei es sich jedoch als vorteilhaft erwiesen hat, wenn die gewählte Anzahl an Steigleitungen 234 gleichsam ein Vielfaches von zwei, vier und acht ist, wobei eine Anzahl von vierundzwanzig Steigleitungen 234 als besonders geeignet angesehen wird.

In den einzelnen Steigleitungen 234 steigt die zugeführte und in der Vorverteilplatte 23 auf die einzelnen Steigleitungen 234 verteilte und aus unterschiedlichen Extrudern stammende Schmelze jeweils getrennt parallel zur Mittelachse M in Richtung der Modulplatten 25 auf, wobei sowohl die Grundplatte 24 als auch die einzelnen Modulplatten 25 jeweils eine entsprechende Anzahl an einander fortsetzenden Abschnitten der einzelnen Steigleitungen 234 aufweisen.

Für die Zuführung jeweils einer Schmelze als Schicht des herzustellenden rohrförmigen Schmelzestranges in den Schmelzekanal 4 ist jeweils eine Modulplatte 25 vorgesehen, die so konfiguriert wird, dass sie die zugeordnete Schmelze aus dem entsprechenden einen oder gegebenenfalls auch mehreren Steigleitungen 234 gleichförmig über den Umfang verteilt in den Schmelzekanal 4 abgibt.

Dazu sind in den einzelnen Modulplatten 25 Zuführkanäle 251 etwa im Bereich der oberen Stirnfläche derselben angeordnet, die über eine entsprechende Öffnung mit der jeweils benötigten Steigleitung 234 in Verbindung stehen, sodass die zugeführte Schmelze in den Zuführkanal 251 übertreten kann. Zur Vermeidung von toten Kanalabschnitten wird nach einer solchen Entnahmestation der weitere Verlauf der Steigleitungen 234 vorzugsweise verschlossen. Die in den Zuführkanal 251 aus der Steigleitung 234 übergetretene Schmelze wird im dargestellten Ausführungsbeispiel durch die Modulplatte 25 hindurch auf die gegenüberliegende unterseitige Stirnfläche geführt und gelangt dort in eingebrachte Spiralkanäle 252, die die Schmelze letztlich über den Umfang verteilt gleichmäßig in den Schmelzekanal 4 übertreten lassen. Auch hier kann die Zuordnung der Kanäle zur ober- und unterseitigen Stirnfläche auch abweichend ausgeführt werden.

Im Ausführungsbeispiel gemäß Figur 4a ist dargestellt, dass eine aus zwei diametral gegenüberliegenden Steigleitungen 234 zugeführte Schmelze über jeweils verzweigte Zuführkanäle 251 auf jeweils vier Spiralkanäle 252 verteilt wird, während im Ausführungsbeispiel nach Figur 4b eine solche Verteilung auf vier Spiralkanäle 252 von jeweils vier diametral gegenüberliegenden Steigleitungen 234 ausgeht. Schließlich zeigt die Figur 4c eine Ausführungsform, bei der aus insgesamt acht Steigleitungen 234 über verzweigte Zuführkanäle 251 jeweils zwei Spiralkanäle 252, mithin insgesamt sechzehn Spiralkanäle 252 mit Schmelze beaufschlagt werden. Die im jeweiligen Ausführungsbeispiel nicht genutzten Steigleitungen 234 stehen für die Zuführung anderer Schmelzen zu weiteren Modulplatten 25 zur Verfügung.

Die Spiralkanäle 252 sind zur weiteren Verringerung des Platzbedarfs der Modulplatten 25 innerhalb des Schmelzekanals 4 jeweils auf einer konischen in den Schmelzekanal 4 einmündenden Fläche angeordnet.

Auf diese Weise werden die zugeführten Schmelzen flexibel und platzsparend vorverteilt und über die unterschiedlichen Steigleitungen 234 einem modular aufbaubaren System aus Modulplatten 25 zur Ausbildung des Innenwerkzeuges 2 zugeführt. Es versteht sich, dass bei abweichender Schichtanzahl auch entsprechend abweichende Anzahlen an Steigleitungen 234 und Modulplatten 25 vorgesehen werden können. Die Verweilzeit der innersten Schicht entlang des Innenwerkzeuges 2 wird gegenüber dem Stand der Technik bedeutend verringert.

Auch das Außenwerkzeug 3, welches im Prinzip keinen konstruktiven Beschränkungen unterliegt, ist im dargestellten Ausführungsbeispiel modulartig als "Pancake"-Verteiler ausgeführt und umfasst eine Vielzahl von modular aufeinandergestapelten Modulplatten 30, die jeweils eine Schicht in an sich bekannter Weise radial nach innen dem Schmelzekanal 4 zuführen. Sämtliche Modulplatten 30 sind über einen die Modulplatten 30 oberseitig übergreifenden Außenmantel 31 und einen unterseitigen Spannring 32 mittels Spannschrauben 33 zu einer kompakten Einheit verspannt, wobei auch der Außenmantel 31 jeder Modulplatte 30 zugeordnet einen abgestuften Zentriersitz aufweisen kann.

Die vorangehend beschriebene Erfindung ist nicht auf die in der Zeichnung ersichtlichen Ausführungsbeispiele beschränkt, sondern kann auch hiervon abweichende Anzahlen von Modulplatten 25, 30 und Anordnungen der einzelnen Bauteile aufweisen. Es ist auch möglich, mehr als eine Vorverteilplatte 23 vorzusehen, um die einzelnen Steigleitungen 234 mit Schmelzen zu beaufschlagen. Auch die Vorverteilplatten 23 können modular aufeinander gestapelt werden.

## Patentansprüche

1. Mehrschichtwerkzeug zur Herstellung eines aus mehreren Schichten bestehenden rohrförmigen Schmelzestranges thermoplastischer Kunststoffe, umfassend ein Innenwerkzeug (1) sowie ein das Innenwerkzeug (1) umgebendes Außenwerkzeug (3), zwischen denen ein Schmelzekanal (4) mit ringförmiger Austrittsöffnung ausgebildet ist, wobei das Innenwerkzeug (1) mindestens eine Einspeiseöffnung (230) für die Zuführung von Schmelze und Kanäle für die Überleitung der Schmelze von der Einspeiseöffnung (230) in den Schmelzekanal (4) aufweist, **dadurch gekennzeichnet, dass** das Innenwerkzeug einen Vorverteilabschnitt (202) und einen Verteilabschnitt (201) umfasst, wobei
• der Vorverteilabschnitt (202) mindestens eine Vorverteilplatte (23) aufweist, die im Bereich ihres Umfanges mit mindestens einer Einspeiseöffnung (230) ausgebildet ist, die über innerhalb der Vorverteilplatte (23) verlaufende erste Verbindungskanäle (231) in Verteilkanäle (232) mündet, welche im Bereich einer Stirnseite der Vorverteilplatte (23) ausgebildet sind und von dort über innerhalb der Vorverteilplatte (23) verlaufende zweite Verbindungskanäle (233a) in dritte Verbindungskanäle (233b) führen, die im Bereich der gegenüberliegenden Stirnseite (21) der Vorverteilplatte (23) ausgebildet sind und von dort mit durch die Vorverteilplatte (23) verlaufenden Steigleitungen (234) kommunizieren, und
• der Verteilabschnitt (201) für die Zuführung jeder Schicht des Schmelzestranges in den Schmelzekanal (4) eine Modulplatte (25) aufweist und benachbarte Modulplatten (25) unmittelbar aneinander anliegend angeordnet sind, wobei jede Modulplatte (25) einander fortsetzende Abschnitte der Steigleitungen (234) umfasst und mit Zuführkanälen (251) ausgebildet ist, die mit mindestens einer Steigleitung (234) kommunizieren und ausgehend von der Steigleitung (234) durch die Modulplatte hindurch in Spiralkanäle (252) einmünden, die im Bereich einer Stirnseite der Modulplatte (25) ausgebildet sind und mit dem Schmelzekanal (4) kommunizieren.

2. Mehrschichtwerkzeug nach Anspruch 1, **dadurch gekennzeichnet, dass** zwischen der mindestens einen Vorverteilplatte (23) und der benachbarten Modulplatte (25) eine Basisplatte (24) vorgesehen ist, die fortsetzende Abschnitte der Steigleitungen (234) aufweist.

3. Mehrschichtwerkzeug nach Anspruch 1 oder 2, **dadurch gekennzeichnet, dass** ausgehend von der Einspeiseöffnung (230) zwei verzweigte erste Verbindungskanäle (231) in der Vorverteilplatte (23) ausgebildet sind.

4. Mehrschichtwerkzeug nach einem der Ansprüche 1 bis 3, **dadurch gekennzeichnet, dass** sich die dritten Verbindungskanäle (233b) auf die Steigleitungen (234) verzweigen, deren Anzahl ein Vielfaches von zwei, vier und acht ist.

5. Mehrschichtwerkzeug nach einem der Ansprüche 1 bis 4, **dadurch gekennzeichnet, dass** die Steigleitungen (234) innerhalb der Modulplatten (25) in Strömungsrichtung der Schmelze gesehen hinter der Überleitung in die Zuführkanäle (251) verschlossen sind.

6. Mehrschichtwerkzeug nach einem der Ansprüche 1 bis 5, **dadurch gekennzeichnet, dass** mindestens eine der Modulplatten (25) zumindest im Bereich der Spiralkanäle (251) eine konische Oberfläche aufweist.

7. Mehrschichtwerkzeug nach einem der Ansprüche 1 bis 6, **dadurch gekennzeichnet, dass** die mindestens eine Vorverteilplatte (23) scheibenförmig ausgebildet ist.

8. Mehrschichtwerkzeug nach einem der Ansprüche 1 bis 7, **dadurch gekennzeichnet, dass** das Innenwerkzeug (2) einen zentralen Dorn (20) aufweist und die mindestens eine Vorverteilplatte (23) und die Modulplatten (25) den Dorn (20) koaxial umgeben und der Dorn (20) jeder Vorverteilplatte (23) und Modulplatte (25) zugeordnet einen abgestuften Zentriersitz aufweist.

9. Mehrschichtwerkzeug nach Anspruch 8, **dadurch gekennzeichnet, dass** der Dorn (20) an einem seiner Enden stufenförmig vergrößert ausgebildet ist und an seinem anderen Ende ein Spannjoch (21) mit Spannschrauben (22) aufweist, zwischen denen die Modulplatten (25) und die mindestens eine Vorverteilplatte (23) verspannbar sind.

## Claims

1. Multiple layer tool for producing a tubular melt strand of thermoplastic plastics consisting of several layers, comprising an inner tool (1) and an outer tool (3) surrounding the inner tool (1), between which a melt channel (4) with an annular outlet opening is formed, wherein the inner tool (1) has at least one feed opening (230) for the supply of melt and channels for the transfer of the melt from the feed opening (230) into the melt channel (4), **characterised in that** the inner tool comprises a pre-distribution portion (202) and a distribution portion (201), wherein
• the predistribution portion (202) has at least one predistribution plate (23) which is formed in the region of its periphery with at least one feed opening (230) which opens into distribution channels (232) via first connecting channels (231) extending within the predistribution plate (23), which are formed in the region of an end face of the predistribution plate (23) and lead from there via second connecting channels (233a) extending within the predistribution plate (23) into third connecting channels (233b) which are formed in the region of the opposite end face (21) of the predistribution plate (23) and from there communicate with risers (234) extending through the predistribution plate (23), and
• the distribution portion (201) has a module plate (25) for feeding each layer of the melt strand into the melt channel (4), and neighbouring module plates (25) are arranged directly adjacent to one another, wherein each module plate (25) comprises portions of the risers (234) which continue one another and is formed with feed channels (251), which communicate with at least one riser (234) and, starting from the riser (234), open through the module plate into spiral channels (252), which are formed in the region of an end face of the module plate (25) and communicate with the melt channel (4).

2. Multiple layer tool according to claim 1, **characterised in that** a base plate (24) is provided between the at least one predistribution plate (23) and the neighbouring module plate (25), which base plate (24) has continuing portions of the risers (234).

3. Multiple layer tool according to claim 1 or 2, **characterised in that** two branched first connecting channels (231) starting from the feed opening (230) are formed in the predistribution plate (23).

4. Multiple layer tool according to any one of claims 1 to 3, **characterised in that** the third connecting channels (233b) branch onto the risers (234), the number of which is a multiple of two, four and eight.

5. Multiple layer tool according to any one of claims 1 to 4, **characterised in that** the risers (234) within the module plates (25) are, viewed in the direction of flow of the melt, closed downstream of the transfer into the feed channels (251).

6. Multiple layer tool according to any one of claims 1 to 5, **characterised in that** at least one of the module plates (25) has a conical surface at least in the region of the spiral channels (251).

7. Multiple layer tool according to any one of claims 1 to 6, **characterised in that** the at least one predistribution plate (23) is disc-shaped.

8. Multiple layer tool according to any one of claims 1 to 7, **characterised in that** the inner tool (2) has a central mandrel (20) and the at least one predistribution plate (23) and the module plates (25) coaxially surround the mandrel (20) and the mandrel (20) has a stepped centring seat associated with each predistribution plate (23) and module plate (25).

9. Multiple layer tool according to claim 8, **characterised in that** the mandrel (20) is enlarged in a stepped manner at one of its ends and has a clamping yoke (21) with clamping screws (22) at its other end, between which the module plates (25) and the at least one predistribution plate (23) can be clamped.

## Revendications

1. Outil multicouche pour la fabrication d'une barre de fonte tubulaire se composant de plusieurs couches de matières plastiques thermoplastiques, comprenant un outil intérieur (1) ainsi qu'un outil extérieur (3) entourant l'outil intérieur (1), entre lesquels un canal de fonte (4) est réalisé avec une ouverture de sortie annulaire, dans lequel l'outil intérieur (1) présente au moins une ouverture d'alimentation (230) pour l'amenée de fonte et des canaux pour la transmission de la fonte de l'ouverture d'alimentation (230) dans le canal de fonte (4), **caractérisé en ce que** l'outil intérieur comporte une section de pré-distribution (202) et une section de distribution (201), dans lequel
- la section de pré-distribution (202) présente au moins une plaque de pré-distribution (23) qui est réalisée dans la zone de sa périphérie avec au moins une ouverture d'alimentation (230) qui débouche par le biais de premiers canaux de liaison (231) s'étendant dans la plaque de pré-distribution (23) dans des canaux de distribution (232) qui sont réalisés dans la zone d'un côté avant de la plaque de pré-distribution (23) et de là mènent par le biais de deuxièmes canaux de liaison (233a) s'étendant dans la plaque de pré-distribution (23) dans des troisièmes canaux de liaison (233b) qui sont réalisés dans la zone du côté avant (21) opposé de la plaque de pré-distribution (23) et de là communiquent avec des conduites montantes (234) s'étendant à travers la plaque de pré-distribution (23), et
- la section de distribution (201) présente pour l'amenée de chaque couche de la barre de fonte dans le canal de fonte (4) une plaque de module (25) et des plaques de module (25) contigües sont agencées reposant directement l'une contre l'autre, dans lequel chaque plaque de module (25) comporte des sections se poursuivant des conduites montantes (234) et est réalisée avec des canaux d'amenée (251) qui communiquent avec au moins une conduite montante (234) et débouchent à partir de la conduite montante à travers la plaque de module dans des canaux en spirale (252) qui sont réalisés dans la zone d'un côté avant de la plaque de module (25) et communiquent avec le canal de fonte (4).

2. Outil multicouche selon la revendication 1, **caractérisé en ce qu'**une plaque de base (24) est prévue entre l'au moins une plaque de pré-distribution (23) et la plaque de module (25) contigüe qui présente des sections se poursuivant des conduites montantes (234).

3. Outil multicouche selon la revendication 1 ou 2, **caractérisé en ce qu'**à partir de l'ouverture d'alimentation (230) deux premiers canaux de liaison (231) ramifiés sont réalisés dans la plaque de pré-distribution (23).

4. Outil multicouche selon l'une des revendications 1 à 3, **caractérisé en ce que** les troisièmes canaux de liaison (233b) se ramifient sur les conduites montantes (234), dont le nombre est un multiple de deux, quatre et huit.

5. Outil multicouche selon l'une des revendications 1 à 4, **caractérisé en ce que** les conduites montantes (234) sont fermées dans les plaques de module (25) vu dans le sens d'écoulement de la fonte derrière la transmission dans les canaux d'amenée (251).

6. Outil multicouche selon l'une des revendications 1 à 5, **caractérisé en ce qu'**au moins une des plaques de module (25) présente une surface conique au moins dans la zone des canaux en spirale (251).

7. Outil multicouche selon l'une des revendications 1 à 6, **caractérisé en ce que** l'au moins une plaque de pré-distribution (23) est réalisée en forme de disque.

8. Outil multicouche selon l'une des revendications 1 à 7, **caractérisé en ce que** l'outil intérieur (2) présente une épine (20) centrale et l'au moins une plaque de pré-distribution (23) et les plaques de module (25) entourent coaxialement l'épine (20) et l'épine (20) associée à chaque plaque de pré-distribution (23) et plaque de module (25) présente un siège de centrage étagé.

9. Outil multicouche selon la revendication 8, **caractérisé en ce que** l'épine (20) est réalisée de manière agrandie à une de ses extrémités en gradins et à son autre extrémité présente un étrier de serrage (21) avec des vis de serrage (22), entre lesquelles les plaques de module (25) et l'au moins une plaque de pré-distribution (23) peuvent être serrées.
